# FASCICULE DE BREVET EUROPEEN

(11) **EP 0 549 490 B1**
(45) Date de publication et mention de la délivrance du brevet: **06.09.1995**
(21) Numéro de dépôt: 92420466.2
(22) Date de dépôt: 17.12.1992
(51) Int. Cl.: F16K 31/06

(54) **Electrovanne à noyau mobile plat**
Elektromagnetventil mit einem flachen beweglichen Kolben
Solenoid valve with a flat movable plunger

(30) Priorité: 23.12.1991 FR 9116284
(43) Date de publication de la demande: 30.06.1993
(73) Titulaire: EATON S.A.M., MC-98000 Monaco (MC)
(72) Inventeur: Marchetti, Christophe, F-06210 Mandelieu (FR); Desaint, Gérard, F-06500 Menton (FR)
(74) Mandataire: Bratel, Gérard

(56) Documents cités:
- CH-A- 264 710
- DE-A- 3 133 060
- GB-A- 1 559 836
- US-A- 3 921 670
- US-A- 4 005 733
- US-A- 4 211 257

## Description

L'invention concerne une électrovanne, qui comprend de façon traditionnelle une bobine enroulée autour d'une carcasse, un circuit magnétique extérieur entourant la bobine, au moins un noyau fixe disposé à l'intérieur de la carcasse et un noyau mobile déplaçable, notamment à l'encontre de l'action d'un ressort de rappel, suivant l'axe de la bobine, le noyau mobile étant prévu pour provoquer l'obturation ou la libération d'au moins un passage de fluide, selon sa position axiale. Plus particulièrement, cette invention se rapporte à une électro,vanne dans laquelle le noyau mobile possède une configuration plate.

On a déjà proposé des électrovannes dans lesquelles le noyau mobile est réalisé sous la forme d'un disque ou d'une rondelle métallique de relativement faible épaisseur, avec une conformation circulaire ou annulaire. Grâce à sa forme plate, un tel noyau mobile permet d'obtenir des surfaces d'entrefer importantes, pour un encombrement et un poids faibles, comparativement à un noyau plongeur classique de forme cylindrique allongée.

Dans certaines réalisations d'électrovannes à noyau mobile plat déjà proposées, le noyau mobile plat métallique vient directement s'appliquer contre un siège fixe également métallique, pour assurer l'obturation. De telles réalisations sont montrées dans les documents US-A-4005733, CH-A-264710 et DE-A-3133060. Il en résulte des bruits de fonctionnement, une usure accélérée et une étanchéité imparfaite en position de fermeture.

Des bruits de fonctionnement peuvent être aussi observés lorsque le noyau mobile plat parvient en position finale d'ouverture.

Dans d'autres réalisations connues d'électrovannes à noyau mobile plat, plus perfectionnées, le noyau mobile est réalisé comme une rondelle métallique au centre de laquelle est disposé un organe d'obturation en matériau non-métallique souple, prévu pour venir s'appliquer contre au moins un siège fixe - voir les documents GB-A-1559836 et US-A-3921670, et accessoirement le document US-A-4211257 (dans lequel, toutefois, le noyau mobile n'est pas de forme rigoureusement plate). Cette disposition améliore l'étanchéité, mais elle ne résoud pas le problème des bruits de fonctionnement, qui se produisent lorsque la partie périphérique de la rondelle métallique vient buter, en fin de course, contre des parties internes fixes de l'électrovanne.

Par ailleurs, il existe des difficultés pour assurer le centrage et le guidage du noyau mobile plat, aussi bien lors de son montage initial qu'en cours d'utilisation de l'électrovanne ; un centrage et un guidage imparfaits, se combinant avec l'effet de forces magnétiques radiales, engendrent des frottements du noyau mobile contre le circuit magnétique extérieur.

La présente invention vise à éviter ces inconvénients, en fournissant une électrovanne à noyau mobile plat possèdant une structure qui procure des améliorations fonctionnelles notables, du point de vue de la diminution des bruits de fonctionnement, de la précision de centrage et de guidage et de la facilité de montage, dans une réalisation qui reste simple et économique.

A cet effet, dans l'électrovanne objet de l'invention, avec noyau mobile de configuration plate réalisé comme une rondelle métallique au centre de laquelle est disposé un organe d'obturation en matériau non-métallique souple, prévu pour venir s'appliquer contre au moins un siège fixe, il est prévu que la rondelle métallique du noyau mobile porte, dans la région de sa périphérie, une pluralité de plots en matériau non-métallique souple, servant de butées mécaniques de fin de course pour le noyau mobile. Ces plots périphériques qui évitent les bruits sont, de préférence, réalisés comme des organes traversant des trous correspondants de la rondelle et faisant saillie sur les deux faces de cette dernière, pour servir de butées de fin de course dans les deux sens de déplacement du noyau mobile plat.

Dans le cas où l'organe central. d'obturation se présente lui-même comme une pastille traversant un trou central de la rondelle et possédant des parties saillantes sur les deux faces de cette rondelle et coopérant respectivement avec deux sièges .opposés, l'invention prévoit que l'organe central d'obturation et les plots périphériques sont formés par surmoulage d'un matériau synthétique souple.

Ainsi, l'organe central d'obturation et les plots périphériques peuvent être commodément formés de façon simultanée, par une unique opération de surmoulage d'un matériau synthétique souple, tel que fluorosilicone, sans nécessité d'aucun'moyen de fixation particulier.

Selon un autre aspect de l'invention, la rondelle métallique du noyau mobile plat présente à sa périphérie, dans les régions situées entre les plots précités, des encoches radiales de centrage et de guidage prévues pour coopérer avec des doigts de centrage et de guidage, de direction axiale, solidaires de la carcasse de l'électrovanne.

Ces doigts assurent un centrage et un guidage précis du noyau mobile plat, relativement au circuit magnétique.extérieur, et ils évitent ainsi les frottements de la rondelle métallique contre ce circuit, qui pourraient résulter de forces magnétiques radiales.

Parmi les doigts de centrage et de guidage, on prévoit avantageusement au moins deux doigts qui sont pourvus, à leur extrémité libre, d'un bec tourné vers l'axe de la bobine et apte à assurer le maintien temporaire du noyau mobile plat, lors du montage de ce dernier. Ainsi, le noyau mobile plat peut être pré-monté et retenu temporairement sur la carcasse par au moins deux doigts opposés, en forme de crochets, qui s'opposent à l'action du ressort de rappel. Le montage du noyau mobile plat est en outre facilité du fait que ses deux faces sont identiques, si bien qu'il peut être engagé dans un sens indifférent sur les doigts de centrage, de guidage et de retenue.

De toute façon, l'invention sera mieux comprise à l'aide de la description qui suit, en référence au dessin schématique annexé représentant, à titre d'exemple non limitatif, une forme d'exécution de cette électrovanne à noyau mobile plat :
Figure 1 est une vue en coupe passant par l'axe d'une électrovanne conforme à la présente invention, avec indication d'une première position du noyau mobile plat ;
Figure 2 est une vue partielle, en coupe passant par l'axe, illustrant une deuxième position du noyau mobile plat de l'électrovanne ;
Figure 3 est une vue de face du noyau mobile plat de cette électrovanne ;
Figure 4 est une vue en coupe du noyau mobile plat, suivant IV-IV de figure 3 ;
Figure 5 est une vue extérieure de la carcasse de l'électrovanne de figure 1, montrant les doigts de centrage, de guidage et de retenue du noyau mobile plat.

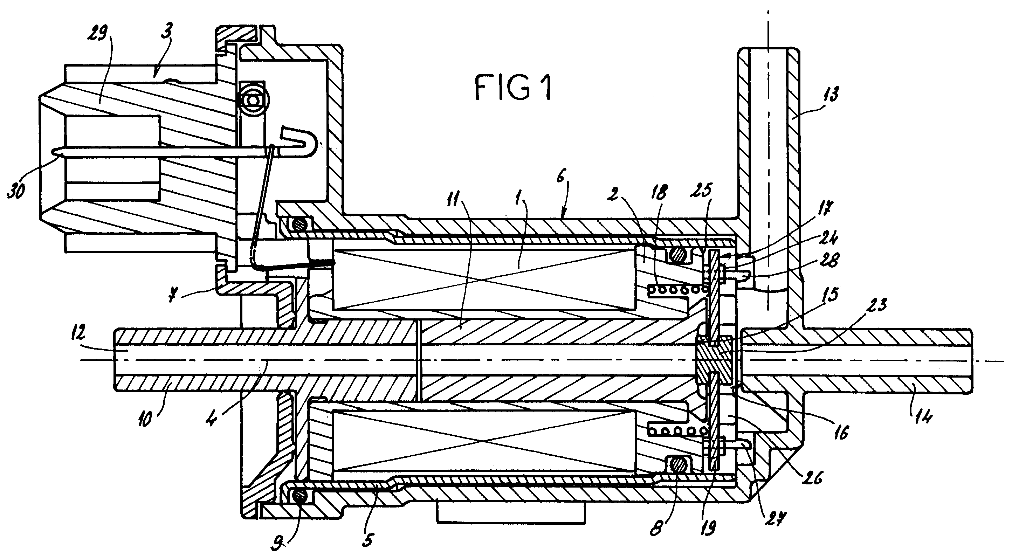

Comme le montre la figure 1, l'électrovanne comprend une bobine 1 enroulée autour d'une carcasse isolante 2 et alimentée électriquement par un connecteur 3, l'axe de la bobine 1 étant indiqué en 4. Cette bobine 1 est entourée par un circuit magnétique fixe extérieur 5, de conformation tubulaire, qui est lui-même monté à l'intérieur d'un boîtier isolant 6, fermé à une extrémité par un couvercle isolant 7. Des joints toriques d'étanchéité 8 et 9 sont placés, respectivement, entre la carcasse 2 et le circuit magnétique 5, et entre ce circuit magnétique 5 et le boîtier 6.

Dans le canal central de la carcasse 2 est disposé un double noyau fixe, subdivisé en un noyau fixe avant 10 et un noyau fixe arrière 11. Les noyaux fixes avant 10 et arrière 11 présentent un passage central 12, s'étendant suivant l'axe 4, le noyau fixe avant 10 formant par son extrémité extérieure un premier embout de raccordement pour un circuit de fluide pneumatique sur lequel doit être insérée l'électrovanne. Le boîtier 6 forme, à une extrémité de l'électrovanne, deux autres embouts 13 et 14 pour le raccordement à ce circuit de fluide. L'un de ces derniers embouts de raccordement 14 est disposé suivant l'axe 4, en regard de l'extrémité postérieure du noyau fixe arrière 11. Les extrémités du noyau fixe arrière 11 et de l'embout 14, situées l'une en regard de l'autre, forment deux sièges annulaires, respectivement 15 et 16 :

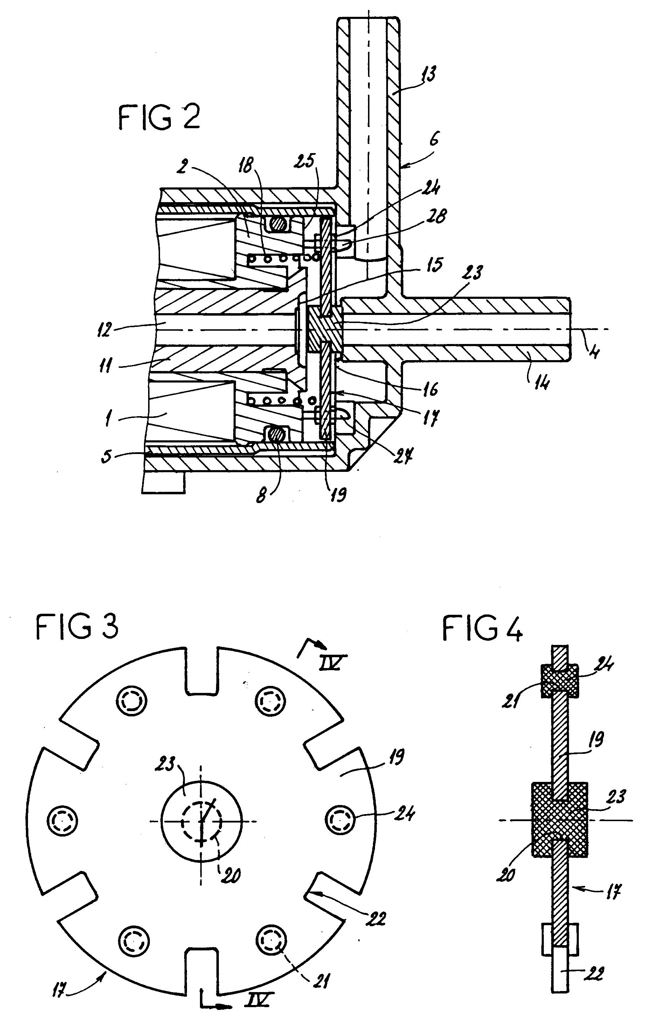

Un noyau mobile 17, de configuration plate, est monté en regard de l'extrémité postérieure du noyau fixe arrière 11, la périphérie du noyau mobile 17 étant voisine de la face intérieure du circuit magnétique extérieur 5. Le noyau mobile plat 17 est déplaçable, suivant la direction de l'axe 4, entre une première position proche du noyau fixe 11 (figure 1) et une autre position éloignée du noyau fixe 11 (figure 2), un ressort de rappel hélicoïdal 18 tendant à repousser le noyau mobile 17 vers cette autre position.

Les figures 3 et 4 montrent, plus précisément, la structure du noyau mobile plat 17. Celui-ci comprend une rondelle métallique 19, qui présente un trou central 20 et une série de trous périphériques 21, lesquels sont ménagés à intervalles angulaires réguliers, par exemple avec six trous périphériques 21 disposés tous les 60°. Des encoches radiales 22 sont ménagées sur le bord circulaire de la rondelle métallique 19, dans les régions situées entre les trous 21.

Le trou central 20 de la rondelle métallique 19 reçoit un organe central d'obturation 23, en forme de pastille, réalisé dans un matériau non-métallique souple. L'organe d'obturation 23 possède deux parties symétriques, saillantes respectivement sur les deux faces de la rondelle 19, qui sont réunies l'une à l'autre par une partie intermédiaire de plus petit diamètre qui traverse le trou central 20 de la rondelle 19.

Les trous périphériques 21 de la rondelle métallique 19 reçoivent, chacun, un plot 24 réalisé dans un matériau non-métallique souple. Comme l'organe central d'obturation 23, chaque plot périphérique 24 traverse par une partie intermédiaire le trou 21 correspondant de la rondelle 19, et il fait ainsi saillie symétriquement sur les deux faces de cette rondelle 19.

L'organe central d'obturation 23 et l'ensemble des plots périphériques 24 sont formés par surmoulage d'un matériau synthétique souple, tel que fluorosilicone.

Lorsque le noyau mobile plat 17 est en place, comme montré aux figures 1 et 2, son organe central d'obturation 23 se situe entre les deux sièges 15 et 16. Quand la bobine 1 est alimentée, le noyau mobile 17 est attiré magnétiquement, et l'organe d'obturation 23 vient s'appliquer contre le siège 15 du noyau fixe arrière 11 ; le passage 12 formé par le double noyau fixes 10 et 11 est donc obturé, tandis que les embouts 13 et 14 sont mis en communication l'un avec l'autre, cette première position étant illustrée par la figure 1. Quand la bobine 1 n'est pas alimentée, le ressort de rappel 18 repousse le noyau mobile plat 17 vers son autre position, dans laquelle l'organe central d'étanchéité 23 vient s'appliquer contre le siège 16 de l'embout 14 ; cet embout 14 est donc obturé, tandis qu'une communication est établie entre le passage 12 et l'embout 13 - voir figure 2.

Lors de l'arrivée du noyau mobile plat 17 dans chacune des deux positions de fin de course précédemment définies, les parties souples que sont l'organe central d'obturation 23 et les plots périphériques 24 constituent des butées élastiques qui réduisent les bruits de fonctionnement. Ainsi, lors de l'arrivée dans la position de la figure 1, la butée mécanique est obtenue grâce à l'appui de l'organe d'obturation 23 sur le siège 15 et au contact simultané des plots 24 avec la face frontale 25 de la carcasse 2. Lors de l'arrivée du noyau mobile 23 dans la position de la figure 2, la butée mécanique est obtenue par l'appui de l'organe d'obturation 23 sur le siège 16 et par le contact simultané des plots 24 avec la face intérieure du boîtier 6.

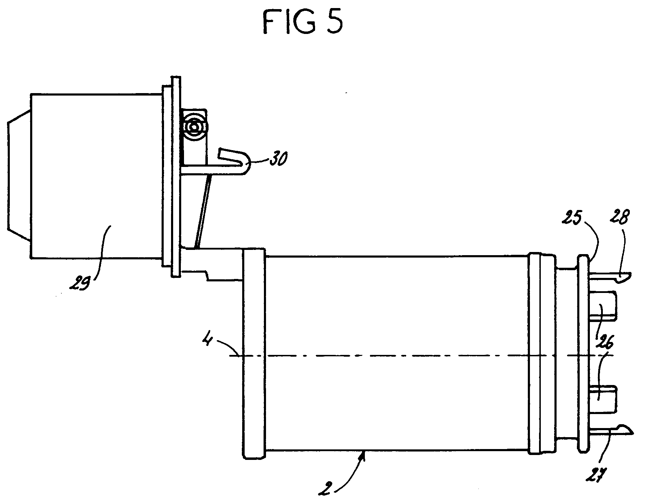

Sur la face frontale 25 de la carcasse 2 font saillie quatre doigts de centrage et de guidage 26, qui sont engagés dans quatre des six encoches radiales 22 de la rondelle métallique 19. De la même face frontale 25 font encore saillie deux autres doigts 27, diamétralement opposés et de longueur plus importante que les doigts précédents 26, chaque doigt 27 étant pourvu, à son extrémité libre, d'un bec 28 tourné vers l'axe 4 - voir aussi figure 5. Les deux doigts 27 sont élastiquement déformables et ils assurent à la manière de crochets, par leurs becs 28 respectifs, un maintien temporaire du noyau mobile plat 17 lors du montage de ce dernier, en s'opposant à l'action du ressort de rappel 18. En cours de fonctionnement de l'électrovanne, ces deux doigts de retenue 27 engagés respectivement dans deux encoches radiales 22 participent, avec les autres doigts 26, au centrage et au guidage du noyau mobile plat 17.

Comme le montrent les figures 1 et 5, l'invention prévoit que sont réalisés par moulage, d'une seule pièce avec la carcasse 2, non seulement les doigts 26, 27 de centrage, de guidage et de retenue du noyau mobile plat 17, mais aussi le corps isolant 29 du connecteur 3 prévu pour l'alimentation électrique de la bobine 1, ce corps isolant 29 étant traversé par des lames conductrices 30.

L'électrovanne à noyau mobile plat 17, décrite précédemment, est utilisable entre autres pour le pilotage de vérins ou de moteurs pneumatiques, et elle peut être commandée par un signal électrique continu ou découpé, amené à la bobine 1 par le connecteur 3. Cette électrovanne peut ainsi être utilisée sur des automobiles, dans l'habitacle ou le compartiment moteur, pour diverses fonctions.

Il va de soi que l'invention ne se limite pas à la seule forme d'exécution de cette électrovanne à noyau mobile plat qui a été décrite ci-dessus, à titre d'exemple. Ainsi, les dispositions des embouts de raccordement pneumatiques, des moyens de connexion électrique et des moyens de fixation mécanique possèdent de multiples variantes, permettant à l'électrovanne de s'adapter à des utilisations très variées. Les détails constructifs du noyau mobile peuvent aussi être modifiés, sans s'éloigner du cadre de l'invention, notamment en ce qui concerne le nombre des plots périphériques 24 et leur matériau constitutif, de même que celui de l'organe central d'obturation 23.

## Revendications

1. Electrovanne comprenant une bobine (1) enroulée autour d'une carcasse (2), un circuit magnétique extérieur (5) entourant la bobine (1), au moins un noyau fixe (10,11) disposé à l'intérieur de la carcasse (2) et un noyau mobile (17) déplaçable, notamment à l'encontre de l'action d'un ressort de rappel (18), suivant l'axe (4) de la bobine (1), le noyau mobile (17) étant prévu pour provoquer l'obturation ou la libération d'au moins un passage de fluide (12,14), selon sa position axiale, ce noyau mobile (17) possédant une configuration plate, et étant réalisé comme une rondelle métallique (19) au centre de laquelle est disposé un organe d'obturation (23) en matériau non-métallique souple, prévu pour venir s'appliquer contre au moins un siège fixe (15,16), caractérisée en ce que la rondelle métallique (19) du noyau mobile plat (17) porte, dans la région de sa périphérie, une pluralité de plots (24) en matériau non-métallique souple, servant de butées mécaniques de fin de course pour le noyau mobile (17).

2. Electrovanne à noyau mobile plat selon la revendication 1, caractérisée en ce que les plots périphériques (24) sont réalisés comme des organes traversant des trous correspondants (21) de la rondelle (19) et faisant saillie sur les deux faces de cette dernière.

3. Electrovanne à noyau mobile plat selon la revendication 2, dont l'organe central d'obturation (23) se présente aussi comme une pastille traversant un trou central (20) de la rondelle (19) et possédant des parties saillantes sur les deux faces de cette rondelle (19) et coopérant respectivement avec deux sièges (15,16) opposés, caractérisée en ce que l'organe central d'obturation (23) et les plots périphériques (24) sont formés par surmoulage d'un matériau synthétique souple.

4. Electrovanne à noyau mobile plat selon l'une quelconque des revendications 1 à 3, caractérisée en ce que la rondelle métallique (19) du noyau mobile plat (17) présente à sa périphérie, dans les régions situées entre les plots (24) précités, des encoches radiales (22) de centrage et de guidage, prévues pour coopérer avec des doigts de centrage et de guidage (26,27), de direction axiale, solidaires de la carcasse (2) de l'électrovanne.

5. Electrovanne à noyau mobile plat selon la revendication 4, caractérisée en ce que, parmi les doigts de centrage et de guidage (26,27), sont prévus au moins deux doigts (27) qui sont pourvus, à leur extrémité libre, d'un bec (28) tourné vers l'axe (4) de la bobine (1) et apte à assurer le maintien temporaire du noyau mobile plat (17), lors du montage de ce dernier.

6. Electrovanne à noyau mobile plat selon la revendication 4 ou 5, caractérisée en ce que sont réalisés, d'une seule pièce avec la carcasse (1), non seulement les doigts de centrage, de guidage et de retenue (26,27) du noyau mobile plat (17), mais aussi le corps isolant (29) du connecteur (3) prévu pour l'alimentation électrique de la bobine (1).

## Claims

1. Solenoid valve comprising a coil (1) wound around a body (2), an external magnetic circuit (5) surrounding the coil (1), at least one fixed core (10, 11) disposed inside the body (2) and a movable core (17) able to be moved, notably, counter to the action of a return spring (18), along the axis (4) of the coil (1), the movable core (17) being designed to bring about the closure or freeing of at least one fluid passage (12, 14), depending on its axial position, this movable core (17) having a flat configuration, and being produced in the form of a metal disc (19) at the centre of which there is disposed a sealing member (23) made of a flexible non-metallic material, designed to come to bear against at least one fixed seat (15, 16), characterised in that the metal disc (19) of the flat movable core (17) carries, in the region of its periphery, a plurality of studs (24) made of a flexible non-metallic material, serving as mechanical end-of-travel stops for the movable core (17).

2. Solenoid valve with flat movable core according to Claim 1, characterised in that the peripheral studs (24) are produced as members passing through corresponding holes (21) in the disc (19) and projecting on both faces of the latter.

3. Solenoid valve with flat movable core according to Claim 2, the central sealing member (23) of which also takes the form of a block passing through a central hole (20) in the disc (19) and having parts projecting on both faces of this disc (19) and cooperating respectively with two seats (15, 16) opposite each other, characterised in that the central sealing member (23) and the peripheral studs (24) are formed by moulding a flexible synthetic material.

4. Solenoid valve with flat movable core according to any one of Claims 1 to 3, characterised in that the metal disc (19) of the flat movable core (17) has, at its periphery, in the regions situated between the aforementioned studs (24), radial centring and guiding notches (22), designed to cooperate with centring and guiding fingers (26, 27), with an axial direction, fixed to the body (2) of the solenoid valve.

5. Solenoid valve with flat movable core according to Claim 4, characterised in that, amongst the centring and guiding fingers (26, 27), there are provided at least two fingers (27) which are provided, at their free end, with a nose (28) turned towards the axis (4) of the coil (1) and able to hold the flat movable core (17) temporarily, when the latter is fitted.

6. Solenoid valve with flat movable code according to Claim 4 or 5, characterised in that not only the centring, guiding and retaining fingers (26, 27) of the flat movable core (17), but also the insulating body (29) of the connector (3) designed for the supply of electricity to the coil (1), are produced in one piece with the coil (1).

## Patentansprüche

1. Elektromagnetventil mit einer Spule (1), die um einen Unterbau (2) gewickelt ist, wobei ein äußerer Magnetkreis (5) die Spule (1) umgibt, und wobei wenigstens ein fester Kern (10,11) im Inneren des Unterbaus (2) vorgesehen ist sowie ein verschiebbarer beweglicher Kern (17), insbesondere beweglich entgegen der Kraft einer Feder (18), und zwar längs der Achse (4) der Spule (1), wobei der bewegliche Kern (17) dazu dient, um wenigstens einen Mediendurchgang (12,14) zu verschließen bzw. zu öffnen, und zwar abhängig von seiner axialen Position, wobei weiterhin der beweglicher Kern (17) flach ausgebildet ist und durch eine metallische Scheibe (19) gebildet wird, in deren Mitte ein Verschlußorgan (23) aus nicht metallischem, elatischem oder biegsamem Material vorgesehen ist, das sich an wenigstens einen gehäusefesten Sitz (15,16) anlegen kann,
**dadurch gekennzeichnet**,
daß die metallische Scheibe (19) des beweglichen, flachen Kerns (17) an ihrem Umfang mehrere Vorsprünge (24) aus elastischem oder biegsamem, nicht metallischem Material aufweist, die als mechanische Anschläge für den beweglichen Kern (17) zur Begrenzung des Verschiebungswegs des beweglichen Kerns dienen.

2. Elektromagnetventil nach Anspruch 1,
**dadurch gekennzeichnet**,
daß die am Umfang vorgesehenen Vorsprünge (24) entsprechende Löcher (21) in der Scheibe (19) durchqueren und an beiden Seiten über die Scheibe vorspringen.

3. Elektromagnetventil nach Anspruch 2, wobei das mittlere Verschlußorgan (23) ebenfalls eine Mittelöffnung (20) der Scheibe (19) durchquert und Teile aufweist, die an den beiden Flächen der Scheibe (19) über diese vorspringen, und die mit zwei einander gegenüberliegenden Sitzen (15,16) zusammenarbeiten,
**dadurch gekennzeichnet**,
daß das mittlere Verschlußorgan (23) und die am Umfang vorgesehenen Vorsprünge (24) aus biegsamem oder elastischem Kunststoffmaterial gegossen sind.

4. Elektromagnetventil nach einem der Ansprüche 1 bis 3,
**dadurch gekennzeichnet**,
daß die metallische Scheibe (19) des beweglichen, flachen Kerns (17) an ihrem Umfang in denjenigen Gebieten, die sich zwischen den erwähnten Vorsprüngen (24) befinden, radiale Einschnitte (22) hat, die zum Zentrieren und zur Führung dienen, und die mit Fingern (26,27) zusammenarbeiten, die axial ausgerichtet sind und die ebenfalls zum Zentrieren und zum Führen dienen, und die fest mit dem Unterbau (2) des Elektromagnetventils verbunden sind.

5. Elektromagnetventil nach Anspruch 4,
**dadurch gekennzeichnet**,
daß wenigstens zwei der Finger (27) zum Führen und zum Zentrieren an ihren freien Enden jeweils einen Vorsprung (28) haben, der zur Achse (4) der Spule (1) weist, und der den beweglichen, flachen Kern (17) zeitweilig bei der Montage des Kerns halten kann.

6. Elektromagnetventil nach Anspruch 4 oder 5,
**dadurch gekennzeichnet**,
daß einstückig mit dem Unterbau (2) nicht nur die zum Zentrieren, Führen und Halten dienenden Finger (26,27) des beweglichen, flachen Kerns (17) ausgebildet sind, sondern auch der Isolierkörper (29) des Anschlußverbinders (3), über den die Spule (1) mit elektrischem Strom versorgt wird.
